# EUROPEAN PATENT APPLICATION

(11) **EP 4 760 933 A1**
(43) Date of publication of application: **17.06.2026**
(21) Application number: 25831788.2
(22) Date of filing: 21.02.2025
(51) Int. Cl.: H01M 50/264

(54) **BATTERY PACK AND ELECTRIC DEVICE**

(30) Priority: 03.07.2024 CN 202421568296 U
(71) Applicant: Eve Energy Co., Ltd., Huizhou, Guangdong 516006 (CN)
(72) Inventor: LIN, Zheng, Huizhou, Guangdong 516006 (CN)
(74) Representative: Studio Torta S.p.A.
(86) International application number: PCT/CN2025/078437
(87) International publication number: WO 2026/007426

(57) **Abstract**

A battery pack and an electrical device are provided. The battery pack includes a battery case and a cell module. The battery case has an accommodation space. The cell module is disposed in the accommodation space. The cell module includes a cell group and a colloid fixing part. The colloid fixing part is provided with multiple cell mounting holes. The cell group includes multiple cells, and each of the cells is disposed in a respective one of the cell mounting holes.

## Description

This application claims the priority of Chinese Patent Application No. 202421568296.2, filed with the China National Intellectual Property Administration on July 3, 2024, the entire contents of which is incorporated herein by reference.

### TECHNICAL FIELD

The present application relates to the field of battery technologies, and in particular, to a battery pack and an electrical device.

### BACKGROUND

Lithium batteries are more environmentally friendly than lead-acid batteries, with faster discharge speed and shorter charging time. Common types of lithium batteries include nickel-hydrogen batteries and lithium iron phosphate batteries.

### SUMMARY

However, in the related technologies, a starting power supply of cylindrical battery packs corresponding to lithium batteries is often fixed by brackets, which has technical problems such as excessive use of fixed components and auxiliary materials, complex processing procedures, and high overall cost of battery packs.

The present application provides a battery pack and an electrical device, aiming to optimize the structure of the battery pack, simplify the preparation process of the battery pack, and reduce the overall cost of the battery pack.

According to a first aspect, the present application provides a battery pack, including:
a battery case having an accommodation space; and
a cell module disposed in the accommodation space;
where the cell module includes a cell group and a colloid fixing part, the colloid fixing part is provided with multiple cell mounting holes, the cell group includes multiple cells, and each cell is disposed in a respective one of the cell mounting holes.

In one possible embodiment, the cell mounting holes are of a through-hole structure, and two end portions of each of the cells are respectively located at two openings of the respective one of the cell mounting holes.

In one possible embodiment, a diameter length of each of the cell mounting holes is equal to a diameter length of a corresponding one of the cells.

In one possible embodiment, the colloid fixing part is integrally formed.

In one possible embodiment, the colloid fixing part is made of foamed adhesive.

In one possible embodiment, the battery case includes a case body and an upper cover disposed on the case body, the case body includes a bottom plate and four side plates disposed to stand around the bottom plate, and the bottom plate, the four side plates, and the upper cover together form an accommodation space.

In one possible embodiment, the battery pack further includes a first fixing part, the first fixing part is disposed between the cell module and the bottom plate, and the first fixing part is disposed to fix the cell module to the bottom plate.

In one possible embodiment, a reinforcing rib is disposed on an outer side of the bottom plate and/or the four side plates.

In one possible embodiment, a pressure relief valve is disposed on at least one target side plate of the four side plates, an explosion-proof valve is disposed on a first end side of the cell, and the first end side is disposed on a side closer to the target side plate.

In one possible embodiment, a lower case body further includes multiple mounting portions, each of the mounting portions includes two reinforcing parts symmetrically disposed and a second fixing part located between the two reinforcing parts, side ends of the two reinforcing parts is connected to the side plates, bottom ends of the two reinforcing parts is respectively connected to a first side end and a second side end of the second fixing part, a third side end of the second fixing part is connected to the side plates, the third side end is located between the first side end and the second side end, and the second fixing part is provided with a mounting hole.

According to a second aspect, the present application provides an electrical device including the battery pack according to the first aspect.

### Beneficial Effects

In the present application, multiple cells included in the cell group are fixed by a colloid fixing part, and each cell is respectively disposed in a corresponding cell mounting hole of the colloid fixing part. The entire cell module is then directly placed in an accommodation space of the battery case, so that there is no need to assemble fixing components such as end plates and side plates. Therefore, the structure of the battery pack is optimized, the preparation process of the battery pack is simplified, resulting in a reduction of the overall cost of the battery pack.

### BRIEF DESCRIPTION OF THE DRAWINGS

FIG. 1 is an exploded structural schematic view of a battery pack according to some embodiments of the present application;
FIG. 2 is a perspective structural schematic view of a cell module, before welding of connection aluminum busbars, according to some embodiments of the present application;
FIG. 3 is a perspective structural schematic view of a cell module, after welding of connection aluminum busbars, according to some embodiments of the present application;
FIG. 4 is a perspective structural schematic view of an assembly of a cell module and a case body according to some embodiments of the present application;
FIG. 5 is a perspective structural schematic view of a battery pack after assembly according to some embodiments of the present application;
FIG. 6 is a top view structural schematic view of a battery case according to some embodiments of the present application.

### Reference Numerals:

100: battery pack; 102: cell module; 104: colloid fixing part; 106: cell; 107: case body; 108: upper cover; 109: bottom plate; 110: side plate; 111: mounting opening; 112: first fixing part; 113: reinforcing rib; 114: pressure relief valve; 115: connection aluminum busbar; 117: reinforcing part; 118: second fixing part; 119: mounting hole.

### DETAILED DESCRIPTION

In the related technologies, a starting power supply of cylindrical battery packs is often fixed by brackets, which has technical problems such as excessive use of fixed components and auxiliary materials, complex processing procedures, and high overall cost of battery packs. To this end, embodiments of the present application provide a battery pack, in which multiple cells included in the cell group are fixed by a colloid fixing part, and each cell is disposed in a corresponding cell mounting hole of the colloid fixing part. The entire cell module is then directly placed in the accommodation space of the battery case, so that there is no need to assemble fixing components such as end plates and side plates. Therefore, the battery pack structure is optimized, the battery pack preparation process is simplified, resulting in a reduction of the overall cost of the battery pack. Specific solutions are described in detail below.

It should be noted that, in the following description, terms "battery module," "battery," "battery element," "cell," and "battery pack" may be used interchangeably, and may refer to any of a variety of rechargeable battery chemistries and constructions, including but not limited to lithium-ion (for example, lithium iron phosphate, lithium cobalt oxide, lithium iron phosphate, other lithium metal oxides, etc.), lithium-ion polymer, nickel-metal hydride, nickel-cadmium, nickel-hydrogen, nickel-zinc, silver-zinc, or other battery types/constructions. The term "electric vehicle" is used herein to refer to a fully electric vehicle (EV), a plug-in hybrid electric vehicle (PHEV), or a hybrid electric vehicle (HEV), in which the hybrid electric vehicle employs multiple propulsion sources including one electric drive system. It should be understood that identical reference numerals are used across multiple drawings to designate the same or functionally equivalent components, and that various modifications of the preferred embodiments, general principles, and features disclosed herein will be apparent to those skilled in the art. In addition, the drawings are intended to illustrate, rather than limit, the scope of the present application and should not be considered drawn to scale.

Embodiments of the present application are generally applicable to systems using electric motors, and more specifically but not exclusively, to electric vehicles using multiphase motors (e.g., induction motors). Electric vehicles utilize one or more energy storage sources, such as battery packs, to provide electrical energy to the vehicle. The energy is used at least in part to propel the vehicle. The stored energy may also be used to provide energy to other vehicle systems, such as vehicle lighting, zoned heating, ventilation and air conditioning (HVAC) systems, auxiliary control systems (e.g., sensors, displays, navigation systems, etc.), and vehicle entertainment systems (e.g., radios, DVD, MP3, etc.). Conventional electric vehicles include passenger vehicles and vehicles designed for transporting goods, examples of which include passenger cars, trucks, electric bicycles, and recreational boats. Electric vehicles also include specialized working vehicles and carts, some of which may, for example, integrate forklifts, scissor lifts, aerial work platforms (lifting and/or articulating), street cleaning systems, conveyors, and flatbed transport platforms.

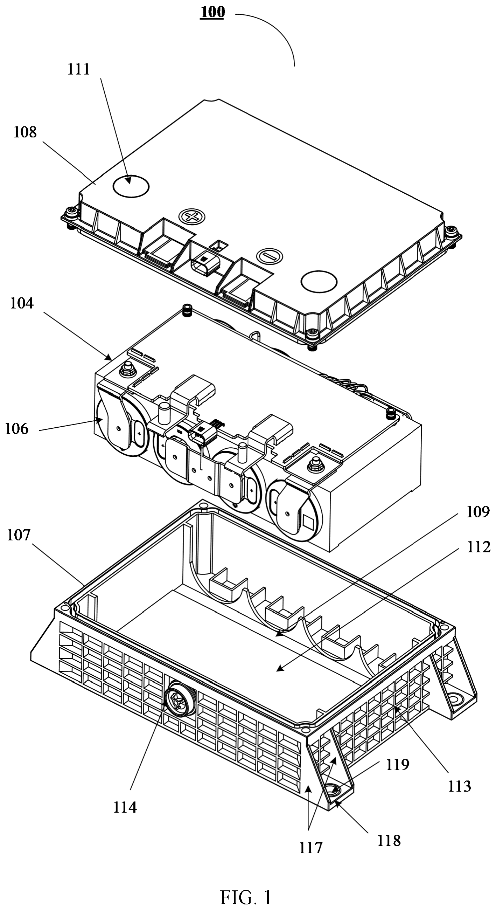

Specifically, referring to FIG. 1, which is an exploded structural schematic view of a battery pack according to some embodiments of the present application. The battery pack 100 specifically includes a battery case (including an upper cover 108 and a case body 107) and a cell module 102. The battery case has an accommodation space. The cell module 102 is disposed in the accommodation space. The cell module 102 includes a cell group (including multiple cells 106) and a colloid fixing part 104. The colloid fixing part 104 is provided with multiple cell mounting holes (not shown in the figure). The cell group includes multiple cells 106, and each cell 106 is disposed in a respective one of cell mounting holes.

It should be noted that the colloid fixing part 104 is formed by dispensing and curing adhesive.

The cells 106 can be cylindrical cells, or in other embodiments, can be other shapes such as prismatic cells, which are not specifically limited.

The structure of the cylindrical cells 106 can mainly include: a housing, typically made of a metallic material such as nickel-plated steel, serving to protect and support the cells 106; a cap, corresponding to the housing, typically located at a positive terminal of the cells 106, serving to seal and protect the cell; a positive electrode, serving as an energy storage component of the cells 106, typically formed from a metal foil or other conductive material; a negative electrode, arranged opposite the positive electrode and likewise formed from a metal foil or other conductive material; a separator, disposed between the positive and negative electrodes to prevent direct contact therebetween while allowing ionic transport; an electrolyte, filling an interior of the cells 106 to facilitate ionic transport between the positive and negative electrodes during charging and discharging; a film, which may refer to a separator or a film material for protection and isolation; a PTC element (positive temperature coefficient thermistor), a protection device that automatically interrupts a circuit when the temperature of the cells 106 is excessively high, thereby preventing overheating; a gasket, used for fixing and sealing internal components inside the cells 106; and a safety valve, configured to release gas when internal pressure is excessively high, thereby preventing explosion of the cells 106. It should be noted that these structures collectively ensure the normal operation and safety of the cylindrical cells 106.

The battery pack 100 can be applied as a starting power supply. The starting power supply is a device configured to provide emergency or temporary power support, typically for starting automobiles, boats, or other equipment requiring high-current starting. It can assist in starting a vehicle when the storage battery is depleted or insufficient. It should be noted that when the battery pack 100 is applied as a starting power supply, output parameters of the battery pack 100 can be set according to practical needs, and correspondingly, the number of cells 106 can also be set according to practical needs. For example, the number of cells 106 included in the battery pack 100 can be one, four, six, eight, or more, or another number, which is not specifically limited.

In addition, the battery pack 100 can also be applied as a power battery, which serves as a power source for tools. Specifically, a power battery is mainly used to provide power for energy-consuming devices such as electric vehicles, electric bicycles, logistics vehicles, and electric boats. This type of battery converts chemical energy into electrical energy through internal oxidation and reduction reactions. Similarly, the output parameters of the battery pack 100 can be set according to practical needs, and correspondingly, the number of the cells 106 can also be set according to practical needs. For example, the number of the cells 106 included in the battery pack 100 may be one, two, three, four, or more, or another number, which is not specifically limited.

In the embodiments of the present application, the multiple cells 106 included in the cell group are fixed by the colloid fixing part 104, and each cell 106 is respectively disposed in a corresponding cell mounting hole of the colloid fixing part 104. The entire cell module 102 is then directly placed in the accommodation space of the battery case, so that there is no need to assemble fixing components such as end plates and side plates 110. Therefore, the structure of the battery pack 100 is optimized, the preparation process of the battery pack 100 is simplified, resulting in a reduction of the overall cost of the battery pack 100.

In some embodiments of the present application, the colloid fixing part 104 is made of foamed adhesive, and the colloid fixing part 104 can be integrally formed.

The foamed adhesive is an adhesive having foaming and bonding properties. In the embodiments of the present application, the foamed adhesive can be used for filling, sealing, bonding, and insulating purposes. Specifically, the foamed adhesive can include at least one of polyurethane foamed adhesive, two-component packaged foamed adhesive, polyethylene foamed adhesive, and organic silicon foamed materials.

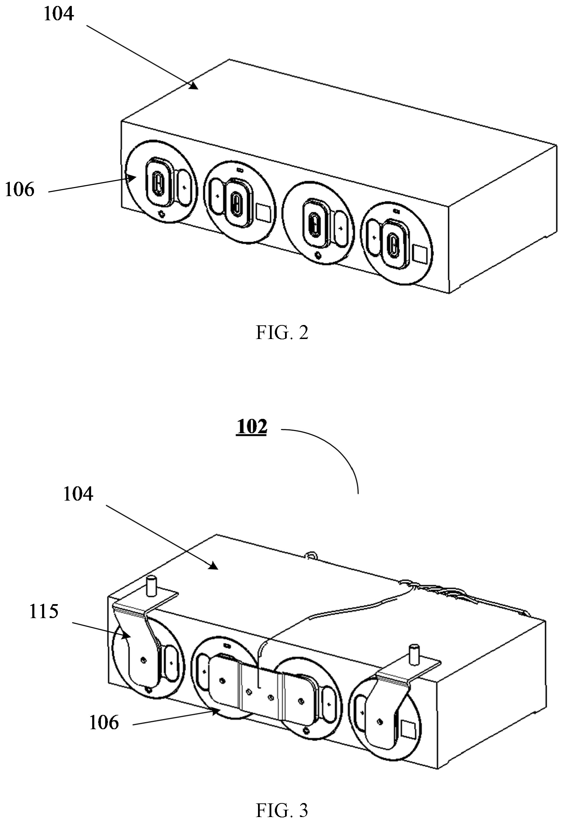

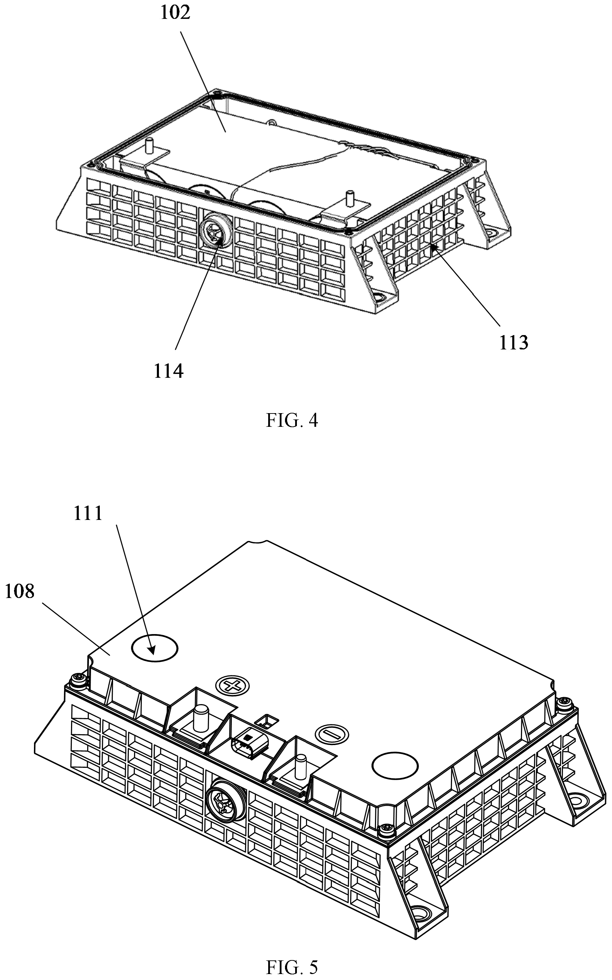

As shown in FIG. 2 to FIG. 5, in a specific embodiment of the present application, a preparation process of the cell module 102 is as follows:
first, the cells 106 to be welded are fixed in a tooling fixture, foamed adhesive is dispensed into the tooling fixture, and the upper cover 108 of the tooling fixture is covered; after the internal foamed adhesive automatically fills gaps, the adhesive is allowed to cure, thereby fixing the cells 106, and the cell module 102 can then be removed; subsequently, connection aluminum busbars 115 are welded to the cell module 102.

In the present application, by combining with a preset tooling fixture, foamed adhesive is directly dispensed into gaps between the multiple cells 106 and between the multiple cells 106 and the tooling fixture, thereby enabling the colloid fixing part 104 to be integrally formed, and the overall shape and size of the colloid fixing part 104 can be set according to practical needs. Specifically, the shape and volume of the accommodation space of the tooling fixture can be set according to practical needs. Generally, the shape and size of the colloid fixing part 104 are adapted to the accommodation space of the battery case. For example, the colloid fixing part 104 can be in a shape of a rectangular foam block.

Since the colloid fixing part 104 of the cell module 102 is made of foamed adhesive and is directly prepared by placing the cells 106 in the tooling fixture and filling with foamed adhesive, the shape and size of each cell mounting hole of the colloid fixing part 104 for accommodating the cells 106 are adapted to the external shape and size of the corresponding cell 106. Specifically, a diameter length of each cell mounting hole is equal to a diameter length of a corresponding cell 106.

It should be noted that the number of cell mounting holes corresponds to the number of cells 106, in a one-to-one relationship. That is, when the number of cells 106 is four, the number of cell mounting holes is also four.

Therefore, compared with the related technologies in which structural adhesive or other stabilizing structures for the cells 106 are pre-disposed in the cell mounting holes, the present application adopts the colloid fixing part 104 that is foamed adhesive integrally molded, thereby enabling appropriate spacing and excellent stability between the cells 106 and the colloid fixing part 104. Therefore, it is unnecessary to additionally provide stabilizing structures for the cells 106.

In some embodiments, the cell mounting holes are of a through-hole structure, and two end portions of each cell 106 are respectively located at two openings of the respective one of the cell mounting holes. In this way, welding and circuit connection between the cells 106 can be conveniently carried out.

The placement manner of the cells 106 can be a horizontal placement manner, i.e., the cells 106 are placed in a horizontal orientation. However, other placement manners are not excluded, and can be set according to practical needs.

In some embodiments of the present application, the battery case includes a case body 107 and an upper cover 108 disposed on the case body 107. The case body 107 includes a bottom plate 109 and four side plates 110 disposed to stand around the bottom plate 109. The bottom plate 109, the four side plates 110, and the upper cover 108 together form an accommodation space.

A mounting opening 111 or the like is formed at an outer side of a top end of the upper cover 108. The specific position of the mounting opening 111 is set according to practical needs.

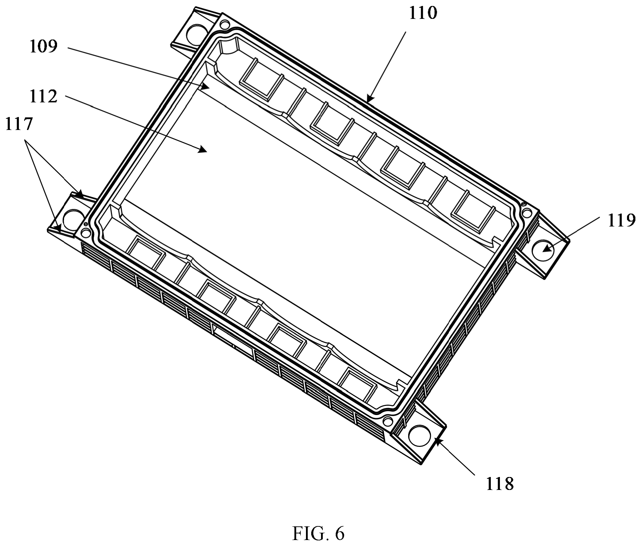

In some embodiments, as shown in FIG. 6, the battery pack 100 further includes a first fixing part 112. The first fixing part 112 is disposed between the cell module 102 and the bottom plate 109. The first fixing part 112 is disposed to fix the cell module 102 to the bottom plate 109.

Specifically, the first fixing part 112 can be at least one layer of structural adhesive. The at least one layer can be one, two, or more layers. The specific number of layers is set according to practical needs, and the thickness of each layer is also set according to practical needs. A coating area of the structural adhesive is not less than an area of contact between the colloid fixing part 104 of the cell module 102 and the bottom plate 109 of the case body 107. In this way, at least one layer of structural adhesive is disposed between the cell module 102 and the bottom plate 109, such that the stability between the cell module 102 and the battery case can be effectively improved. Moreover, the method of applying structural adhesive is easy to operate and low in cost, thereby effectively reducing the manufacturing difficulty and cost of the battery pack 100.

Optionally, the first fixing part 112 can also be a clamping structure, such that the cell module can be placed therein and clamped by the clamping structure.

In some embodiments, a reinforcing rib 113 can be provided at an outer side of the bottom plate 109. Alternatively, reinforcing ribs 113 are disposed on outer sides of the four side plates 110. Alternatively, reinforcing ribs 113 are disposed on both the outer side of the bottom plate 109 and the outer sides of the four side plates 110. In this way, the overall structural stability of the battery case can be effectively enhanced, ensuring that the internal cell module 102 is not easily damaged, thereby improving the safety of the battery pack 100.

Specifically, the reinforcing ribs 113 can include only transverse reinforcing ribs 113, only longitudinal reinforcing ribs 113, or both cross-arranged transverse reinforcing ribs 113 and longitudinal reinforcing ribs 113.

In some embodiments, a pressure relief valve 114 is disposed on at least one target side plate 110 of the four side plates 110. An explosion proof valve (not shown in the figure) is disposed on a first end side of the cells 106, and the first end side is disposed on a side closer to the target side plate 110. The at least one side plate may be one, two, three, or four.

In some embodiments, the lower case body 107 further includes multiple mounting portions 116, which may be three, four, five, or more. It should be noted that the multiple mounting portions should provide a certain degree of stability to the lower case body 107, and therefore the number is at least three. The specific number and positioning of the mounting portions should be set to achieve optimal stability. For example, when the number is three, their positioning should form a triangular arrangement. Each mounting portion includes two reinforcing parts 117 symmetrically disposed and a second fixing part 118 located between the two reinforcing parts 117. Side ends of the two reinforcing parts 117 are connected to the side plates 110. Bottom ends of the two reinforcing parts 117 are respectively connected to a first side end and a second side end of the second fixing part 118. A third side end of the second fixing part 118 is connected to the side plates 110, and the third side end is located between the first side end and the second side end. The second fixing part 118 is provided with a mounting hole 119.

In a specific embodiment, there are four mounting portions, with one mounting portion respectively disposed at each top corner of the case body 107.

The mounting portions are used to install and fix the battery pack 100 to an electrical device. The fixing manner can adopt bolts, i.e., the battery pack 100 is installed and fixed to the electrical device by means of bolts matched with the mounting holes 119.

To better implement the battery pack 100 according to the embodiments of the present application, the present application further provides an electrical device except for the battery pack 100. Specifically, the electrical device specifically includes the battery pack 100.

In some embodiments, when the battery pack 100 is applied as a starting power supply, the electrical device can include, but is not limited to, automobiles, boats, or other equipment requiring high-current starting.

In some embodiments, when the battery is applied as a power battery, the electrical device can include, but is not limited to, energy consuming devices such as electric vehicles, electric bicycles, logistics vehicles, and electric boats.

According to the embodiments of the present application, the multiple cells 106 included in the cell group are fixed by the colloid fixing part 104, and each cell 106 is respectively disposed in a corresponding cell mounting hole of the colloid fixing part 104. The entire cell module 102 is then directly placed in the accommodation space of the battery case, so that there is no need to assemble fixing components such as end plates and side plates 110. Therefore, the structure of the battery pack 100 is optimized, the preparation process of the battery pack 100 is simplified, resulting in a reduction of the overall cost of the battery pack 100 and the overall cost of the electrical device.

## Claims

1. A battery pack, comprising:
a battery case having an accommodation space; and
a cell module disposed in the accommodation space;
wherein the cell module comprises a cell group and a colloid fixing part, the colloid fixing part is provided with a plurality of cell mounting holes, the cell group comprises a plurality of cells, each of the cells is disposed in a respective one of the cell mounting holes.

2. The battery pack according to claim 1, wherein the cell mounting holes are of a through-hole structure, and two end portions of each of the cells are respectively located at two openings of the respective one of the cell mounting holes.

3. The battery pack according to claim 1, wherein a diameter length of each of the cell mounting holes is equal to a diameter length of a corresponding one of the cells.

4. The battery pack according to claim 1, wherein the colloid fixing part is integrally formed.

5. The battery pack according to claim 1, wherein the colloid fixing part is made of foamed adhesive.

6. The battery pack according to any one of claims 1 to 5, wherein the battery case comprises a case body and an upper cover disposed on the case body, the case body comprises a bottom plate and four side plates disposed to stand around the bottom plate, and the bottom plate, the four side plates, and the upper cover together form the accommodation space.

7. The battery pack according to claim 6, wherein the battery pack further comprises a first fixing part, the first fixing part is disposed between the cell module and the bottom plate, and the first fixing part is disposed to fix the cell module to the bottom plate.

8. The battery pack according to claim 6, wherein a reinforcing rib is disposed on an outer side of the bottom plate and/or the four side plates.

9. The battery pack according to claim 6, wherein a pressure relief valve is disposed on at least one target side plate of the four side plates, a safety valve is disposed on a first end side of the cells, and the first end side is disposed on a side adjacent to the target side plate.

10. The battery pack according to claim 6, wherein the lower case body further comprises a plurality of mounting portions, each of the mounting portions comprises two reinforcing parts symmetrically disposed and a second fixing part located between the two reinforcing parts, side ends of the two reinforcing parts are connected to the side plates, bottom ends of the two reinforcing parts are respectively connected to a first side end and a second side end of the second fixing part, a third side end of the second fixing part is connected to the side plates, the third side end is located between the first side end and the second side end, and the second fixing part is provided with a mounting hole.

11. An electrical device, comprising the battery pack according to any one of claims 1 to 10.
